# EUROPEAN PATENT APPLICATION

(11) **EP 4 242 867 A1**
(43) Date of publication of application: **13.09.2023**
(21) Application number: 22160819.3
(22) Date of filing: 08.03.2022
(51) Int. Cl.: G06F 16/25

(54) **CUSTOMER DATA MODEL TRANSFORMATION PROCESS**

(71) Applicant: Chemovator GmbH, 68169 Mannheim (DE)
(72) Inventor: HASEL, Alexander, 76131 Karlsruhe (DE); CIODARO, Gari, 28359 Bremen (DE)
(74) Representative: Maiwald GmbH

(57) **Abstract**

In order to improve data management, a computer-implemented method (200) is provided for performing data model transformation. The method comprises the steps of receiving (210) input data having a first data model, deriving (220) from the received input data use case information indicating a use case the input data belongs to, generating (230), based on the determined use case, configuration data for transforming the input data into output data having a second data model, wherein a uniform data model is required per use case and the second data model is the uniform data model required by the determined use case, and providing (240) the configuration data for transforming the input data. In this way, configuration files needed to control transformation of different data models may be automatically adapted with no (or less user interaction). A uniform data model is obtained per use case. The process is highly flexible and configurable for each use case.

## Description

### FIELD OF THE INVENTION

The present invention relates to data management. In particular, the present invention relates to a computer-implemented data processing method and apparatus, a computer-implemented method and an apparatus for controlling an operation of a device, and a computer program element.

### BACKGROUND OF THE INVENTION

Some known art systems use "Extract, Transform, and Load" (ETL) methodology to correlate the data prior to loading the data into the data warehouse. Extraction refers to actually obtaining the data from individual data sources such as servers. Transformation indicates processing the data to put it into a more useful form or format. Loading refers to the process of loading the data into the tables of a relational database.

Existing systems may require a developer to manually generate the configuration files needed to control transformation in an ETL system. As the importance of data warehousing grows, so grows the need to develop and implement customized ETL systems in a short amount of time. Further, individual data sources (e.g., data from different groups of users, from different production facilities) may have their own data models to meet their own requirements to data consistency and integrity. Existing systems may require a developer to manually adapt configuration files needed to control transformation of different data models in an ETL system.

Thus, data transformation may become a more difficult and often time-consuming process, which may require rigorous manual data structuring and clean-up.

### SUMMARY OF THE INVENTION

There may be a need to improve data management.

The object of the present invention is solved by the subject-matter of the independent claims, wherein further embodiments are incorporated in the dependent claims. It should be noted that the following described aspects of the invention apply also for the computer-implemented data processing method and the apparatus, the computer-implemented method and the apparatus for controlling an operation of a device, and the computer program element.

According to a first aspect of the present invention, there is provided a computer-implemented method for performing data model transformation, comprising:
- receiving input data having a first data model;
- deriving from the received input data use case information indicating a use case the input data belongs to;
- generating, based on the determined use case, configuration data for transforming the input data into output data having a second data model, wherein a uniform data model is required per use case and the second data model is the uniform data model required by the determined use case; and
- providing the configuration data, which is usable for transforming the input data.

In other words, the apparatus and computer-implemented method as describe herein transform the input data under consideration of the use case into the target output format. The use case information is derived from the input data. For example, the use case information may be derived from the relevant attributes of the input data. The configuration files needed to control transformation of input data is then determined based on the use case the input data belongs to. For example, the configuration files, e.g., configurations for data cleaning, data transformation, and data enrichment, may be determined using machine learning.

In this way, configuration files needed to control transformation of different data models may be automatically adapted with no (or less user interaction). A uniform data model is obtained per use case. The process is highly flexible and configurable for each use case.

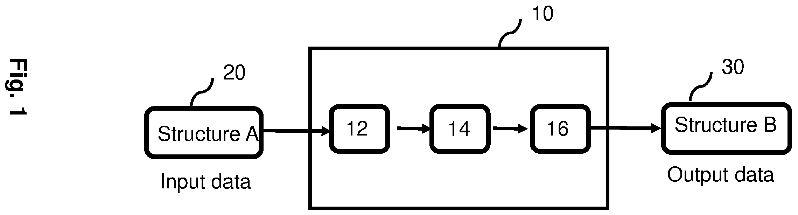

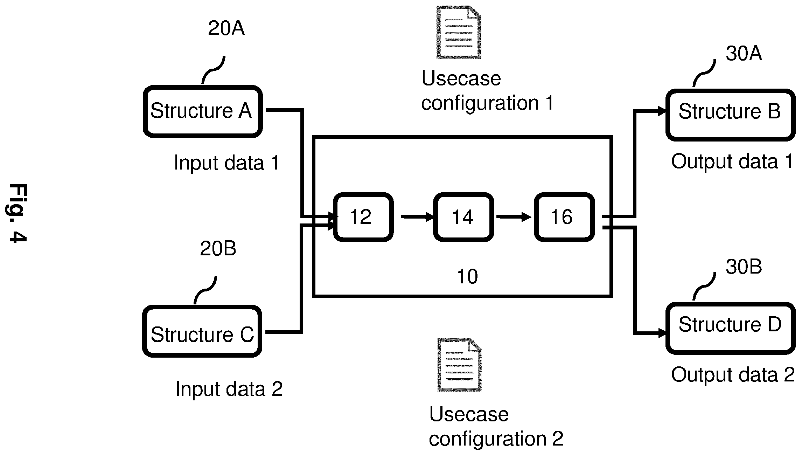

This will be explained hereinafter and in particular with respect to the examples shown in Figs. 1 and 4.

According to an embodiment of the present invention, the configuration data is generated using a data-driven model, wherein the data-driven model has been trained based on a plurality of training examples, each training example comprising input data having a use case and output data associated with a particular configuration.

According to an embodiment of the present invention, the configuration data comprises one or more of the following configurations: configuration for data cleaning, configuration for data transformation, and configuration for data enrichment.

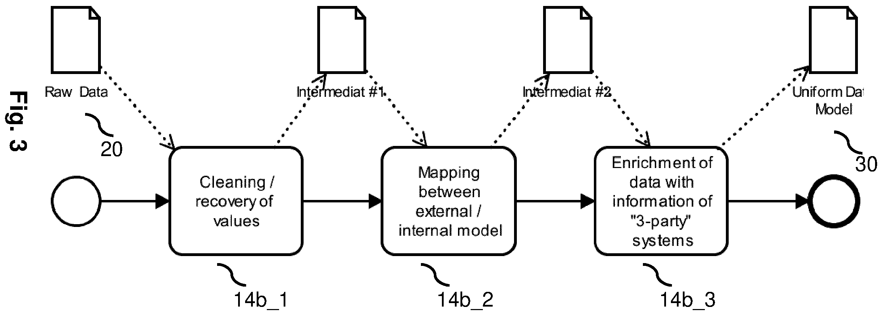

In this way, rigorous manual data structuring and clean-up can be avoided. This will be explained hereinafter and in particular with respect to the example shown in Fig. 3.

According to an embodiment of the present invention, the computer-implemented data processing method further comprises transforming the input data to the output data according to the generated configuration data.

According to an embodiment of the present invention, the configuration data is provided as a reusable procedure template for performing the transformation of data having the first data model.

According to an embodiment of the present invention, the data-driven model is in a cloud environment.

According to an embodiment of the present invention, the input data comprises a device configuration file usable for controlling the operation of a device.

The device configuration file may also be referred to as device configuration data for a device (e.g., sensors). The device configuration file is provided as an instruction to the device for controlling the operation of the device. The device configuration data may be a user-defined blob of data sent to the device. The data may be structured. It can also be of any suitable format, such as text, JavaScript Object Notation (JSON), or serialized protocol buffers.

In this way, the output data has a uniform data model required for controlling the operation of the device

According to a second aspect of the present invention, there is provided a computer-implemented method for controlling an operation of a device, comprising:
- receiving input data usable for controlling the operation of the device;
- transforming the received input data to the output data according to configuration data generated according to the first aspect and any associated example, such that the output data has a uniform data model required for controlling the operation of the device; and
- providing the output data, which is usable for controlling the operation of the device.

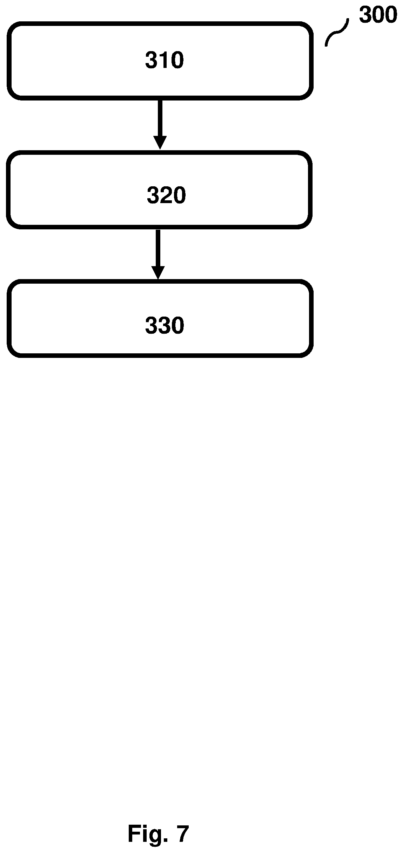

This will be explained hereinafter and in particular with respect to the example shown in Fig. 7.

According to a third aspect of the present invention, there is provided an apparatus, the apparatus comprising one or more processing unit(s) to provide configuration data for transforming an input data into needed output data, wherein the processing unit(s) include instructions, which when executed on the one or more processing unit(s) perform the method steps according to the first aspect and any associated example.

This will be explained in detail hereinafter and in particular with respect to the example shown in Fig. 7.

According to a fourth aspect, there is provided an apparatus for controlling an operation of a device, the apparatus comprising one or more processing unit(s) configured to control the operation of the device, wherein the processing unit(s) include instructions, which when executed on the one or more processing unit(s) perform the method steps of the second aspect.

According to a further aspect of the present invention, there is provided a computer program element comprising instructions, which when executed by a processing unit, cause the processing unit to carry out the steps of the method of the first aspect and any associated example or to carry out the steps of the method of the second aspect and any associated example.

According to another aspect of the present invention, there is provided a computer-readable data carrier having stored thereon the computer program element.

As used herein, the term "data model" may generally refer to the abstract description how data elements are represented and/or how those elements are related to each other, and/or even the physical instantiation of those representations in bits in memory or on permanent storage.

The data model consists of several parts. The logical or abstract description of the data is known as the Schema Definition, or simply as Schema. Likewise, the set of logical behaviors provided over the data in terms of the Schema is known as the Schema API. The description of how the Schema is realized via the database system is known as the Data Model Mapping, or simply as Mapping. Additionally, the set of database primitives and their collective use in providing for the Schema API and Mapping are known as the Implementation. And, finally, the physical representation of the data in permanent or semi-permanent storage is known as the Database Layout, or just Layout. A combination of such parts is the data model, and a combination of these parts along with the data they are meant to represent is an instantiation of the data model. Examples of the data models may include, but are not limited to, a relational model, an object oriented model, and an XML data model.

As used herein, the term "use case" may refer to a list of actions or event steps typically defining the interactions between an actor and a system to achieve a goal. The actor specifies a type of role played by an entity interacting with a system (e.g., by exchanging signals and data), but which is external to the system. A use case is generally named with a phrase that denotes the goal, e.g., configuring a device.

As used herein, the term "use case specification" may refer to a textual document that captures the specific details of a sue case. Use case specifications provide a way to document the functional requirements of a system. They typically follow a template.

### BRIEF DESCRIPTION OF THE DRAWINGS

These and other aspects of the invention will be apparent from and elucidated further with reference to the embodiments described by way of examples in the following description and with reference to the accompanying drawings, in which
Fig. 1 illustrates a block diagram of an exemplary apparatus for data model transformation.
Fig. 2 illustrates stages for transformation of arbitrary input data to unified output data.
Fig. 3 illustrates an exemplary data model transformation module.
Fig. 4 illustrates a further example of the apparatus.
Fig. 5 shows a high-level block diagram of a computing environment.
Fig. 6 illustrates a flow chart illustrating a computer-implemented method for data transformation.
Fig. 7 illustrates a flow chart illustrating a computer-implemented method for controlling an operation of a device.

It should be noted that the figures are purely diagrammatic and not drawn to scale. In the figures, elements which correspond to elements already described may have the same reference numerals. Examples, embodiments or optional features, whether indicated as nonlimiting or not, are not to be understood as limiting the invention as claimed.

### DETAILED DESCRIPTION OF EMBODIMENTS

Individual data sources (e.g., data from different groups of users, from different production facilities) may have their own data models to meet their own requirements to data consistency and integrity. The difference between two data models may range from the simple (different names of a property/column) to the complex (e.g., different object-oriented hierarchy). Thus, data transformation may become a more difficult and often time-consuming process, which may require rigorous manual data structuring and clean-up.

Towards this end, the apparatus and the method as described herein derive the use case information from the input data and perform the transformation of the data model of the input data based on the derived use case information. In this way, a uniform data model is obtained per use case. The process is highly flexible and configurable for each use case.

Fig. 1 shows a block diagram of an exemplary apparatus 10 for data model transformation. The exemplary apparatus 10 comprises an input unit 12, a processing unit 14, and an output unit 16.

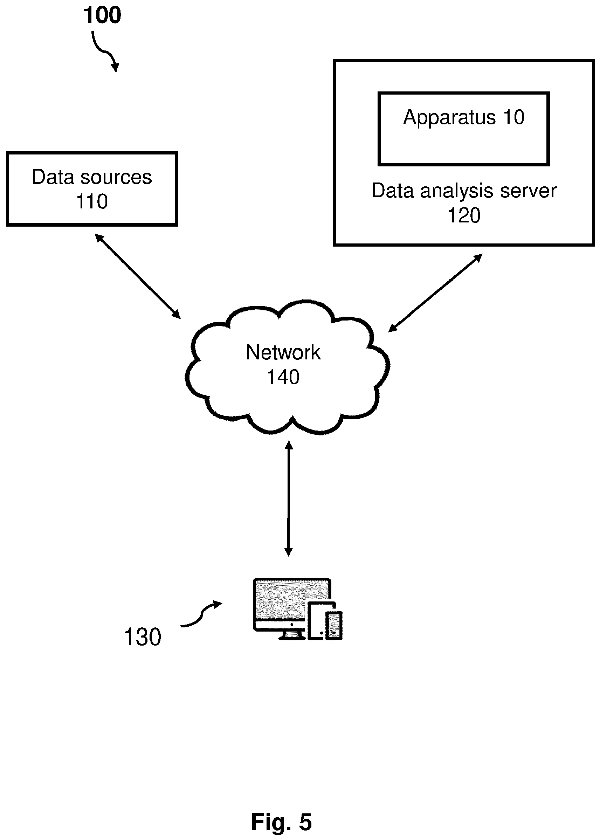

In general, the apparatus 10 may comprise various physical and/or logical components for communicating and manipulating information, which may be implemented as hardware components (e.g., computing devices, processors, logic devices), executable computer program instructions (e.g., firmware, software) to be executed by various hardware components, or any combination thereof, as desired for a given set of design parameters or performance constraints. Although Fig. 1 may show a limited number of components by way of example, it can be appreciated that a greater or a fewer number of components may be employed for a given implementation. Furthermore, the functions provided by one or more components of the apparatus 10 may be combined or separated. Moreover, the functionality of any one or more components of the apparatus 10 may be implemented by any appropriate computing environment, such as personal computing environment, time sharing computing environment, distributed computing environment, cloud computing environment, and cluster computing environment. An exemplary distributed computing environment is shown in Fig. 5

In some implementations, the apparatus 10 may be embodied as, or in, a device or apparatus, such as a server, workstation, or mobile device. The apparatus 10 may comprise one or more microprocessors or computer processors, which execute appropriate software. The processing unit 14 of the apparatus 10 may be embodied by one or more of these processors. The software may have been downloaded and/or stored in a corresponding memory, e.g., a volatile memory such as RAM or a non-volatile memory such as flash. The software may comprise instructions configuring the one or more processors to perform the functions as described herein.

It is noted that the apparatus 10 may be implemented with or without employing a processor, and also may be implemented as a combination of dedicated hardware to perform some functions and a processor (e.g., one or more programmed microprocessors and associated circuitry) to perform other functions. For example, the functional units of the apparatus 10, e.g., the input unit 12, the one or more processing units 14, and the output unit 16 may be implemented in the device or apparatus in the form of programmable logic, e.g., as a Field-Programmable Gate Array (FPGA). In general, each functional unit of the apparatus may be implemented in the form of a circuit.

In some implementations, the apparatus 10 may also be implemented in a distributed manner. For example, some or all units of the apparatus 10 may be arranged as separate modules in a distributed architecture and connected in a suitable communication network, such as a 3rd Generation Partnership Project (3GPP) network, a Long Term Evolution (LTE) network, Internet, LAN (Local Area Network), Wireless LAN (Local Area Network), WAN (Wide Area Network), and the like.

The input unit 12 is configured to receive input data having a first data model. The first data model may be a relational model, an object oriented model, or an XML data model. In the example of Fig. 1, the first data model is also referred to as structure A. Although Fig. 1 may show one input data by way of example, it can be appreciated that a greater number of input data may be employed for a given implementation. For example, Fig. 4 shows a further example of the apparatus for processing two input data.

The input data may comprise any type of data including, but not limited to, data obtained from a laboratory environment and data obtained a production environment. For example, the input data may include experimental data from one or more labs. For example, in a lab concentrating on the synthesis and measurement of biodegradable polymers, the experimental data may include analytics data, solubility data, mechanical testing data, ecotoxicity tests, and/or analytics data generated from software. Production-related data may relate to the setting where software and other products are actually put into operation for their intended uses by the users.

Further, the input data may be in the format for non-cyclical graphs having a tree structure. The input data may be a coherent format including, but not limited to, a JavaScript Object Notation (JSON) file, a comma-separated values (CSV) file, an extensible markup language (XML) file, and a tabular file. Examples of the tabular file may include, but are not limited to a comma-separated values, CSV, format, and a spreadsheet file format from a Microsoft^{®} Excel^{®} file, an Open Document Format, ODF, a Lotus 1-2-3^{®} worksheet format, a Microsoft^{®} Works spreadsheet format, a VisiCalc^{®} spreadsheet format, an Abykus worksheet format, and an Ability spreadsheet format.

The input data may be submitted by one or more users via a user interface. The user interface may be an interactive interface including, but not limited to, a Graphical User Interface (GUI), a character user interface or a touch screen. A user may assess the user interface via an electronic communication device including, but not limited to, a desktop, a notebook, a laptop, or a smart phone. The input data may be retrieved from one or more data sources, such as databases, applications, and/or local files.

The input data may include data associated with different users, groups of users, entities, workflows, or any combination thereof. For example, the input data may comprise data associated with different parts of an organization, e.g., different laboratories or different production utilities, and most likely data from multiple data silos, each data silo representing a collection of information in an organization that is isolated from and not accessible by other parts of the organization. As different users, groups of users, entities, and/or workflows may use their own data model according to their own requirements to data consistency and integrity, the input data may be associated with two or more different data models. For example, Fig. 4 shows exemplary input data associated with two different data models.

The processing unit 14 is configured to derive, from the input data, use case information indicating a use case the input data belongs to.

The use case information defines the interactions between an actor and a system to achieve a goal, and therefore relates to a specific application in which the input data could be potentially be used. A use case is generally named with a phrase that denotes the goal, e.g., configuring a device for analyzing spectra of automotive coating layers, configuring a steam cracker for chemical production, mechanical testing of a device, etc.

As each application may have its own requirements, parts or all of the data model of the input data may require modification in order to meet the requirements of the application. For example, the use case information may indicate that the input data is configuration data, which is usable for controlling the operation of a particular device (e.g., a device for analyzing spectra of automotive coating layers). Therefore, it may be desirable to change the data model of the input data such that it meets the requirements of the application that employs the input data.

In some examples, the processing unit 14 may be configured to identify schema-level information in the input data, and to derive the use case information from the schema-level information. A schema is a set of rules that governs the way that data can be stored. The schema defines the type of entries that are allowed, their attribute structure, and the syntax of the attributes. Examples of the schema-level information may include, but are not limited to, name, description, data type, relationship types (part-of, is-a, etc.), constraints, and schema structures. For example, the schema-level information may include data attributes. A data attribute is a single-value descriptor for a data point or data object. In the context of data models, data attributes usually represent the columns of a data table. For example, a data model may show the primary key (also referred to as unique ID), as well as the attribute column names.

The processing unit 14 may utilize various approaches to derive use case information from the schema-level information. For example, the processing unit 16 may comprise a linguistic matcher that uses user-defined use case specifications, such as names and text including words or sentences describing one or more user-defined use cases, to find semantically similar schema elements in the input data. Name-based matching may match schema elements with a use case having equal or similar names. In some examples, the processing unit 14 may comprise a description-based matcher that determines the similarity between schema elements in the input data and one or more predefined use cases based on comments accompanying the schema elements. In some examples, the use case information may be derived by parsing the natural language text available relating to use case description in the input data. An example technique to process textual use cases is described in A. Sinha, A. Paradkar, P. Kumanan, and B. Boguraev, "A linguistic analysis engine for natural language use case description and its application to dependability analysis in industrial use cases", In DSN '09, Jun. 29-Jul. 2, 2009, pp 327-336.

In general, processing unit 14 may find multiple semantically matched use case candidates. For each candidate, a degree of similarity by a normalized numeric value in the range of 0 to 1 may be estimated in order to identify a most suitable use case for the input data.

The processing unit 14 is further configured to generate, based on the determined use case, configuration data for transforming the input data into output data having a second data model. A uniform data model is required per use case and the second data model is the uniform data model required by the determined use case. The second data model may also be referred to as target data model, which is a data model that meets the data model requirements of an application that potentially employs the input data.

The configuration data may comprise a set of configurations, such as configuration for data cleaning, configuration for data transformation, configuration for data enrichment, or any combination thereof.

Data cleaning is the process of fixing or removing incorrect, corrupted, incorrectly formatted, duplicate, or incomplete data within a dataset. When combining multiple data sources, the quality of data may vary among these data sources. There are many opportunities for data to be duplicated or mislabeled, thereby resulting in errors in the data models. The step of data cleaning may allow to remove invalid formats.

Data transformation is the process of modifying the data model (i.e., first data model) of the input data, and changing parts or all of such data model to obtain a data model (i.e., second data model) of the output data, which meets the data model requirements of the application that employs the data.

Data enrichment is the process of merging third-party data from an external authoritative source with the existing input data.

As an example, the configuration data may be generated using a data-driven model. The data-driven model has been trained based on a plurality of training examples, each training example comprising input data having a use case and output data associated with a particular set of configurations.

The data-driven model may be trained in the following manner. At first, a set of potential input and output data configurations is provided. From these training samples, the data-driven model is trained to learn how to connect input and output data to create configuration data, e.g., three required configurations (cleaning, transformation, and enrichment) for further processing.

During execution, an input dataset is provided to the data-driven model. With the pattern learned during training, the data-driven model can derive configuration files to transform the provided input data (structure A) into the needed output data (structure B) using the available services and process steps. The derived configuration may be in a serialized form, which can be further used to execute the transformation of the input data and likewise data.

For example, a tokenization in Natural Language Processing (NLP) may be used to find the hieratical relevant context of the data. For example, an input JSON might have an XPath like "Company.Employees[].Person.Addresses[].Address.Street". The use-case specific output might be "Customer.Recipient.Street". Those two XPaths are semantically the same and describe the desired mapping between input and output data. To train "the general model" for this case, tokenized inputs of the models are used. With the help of supervised learning, the CNN model is first trained that "Person.Addresses[0].Street" is the same as "Recipient.Street". Later, it is trained to understand that "Company. Employees[0]" is the same as "Customer". The result of the learning is a specific understanding of the XPath between input and output which can later (during execution) be generalized on a broader base of models and use-cases. As the generated configuration can be changed by users (if incorrect) the model can further learn the meaning of XPath between data models and increase it's mapping configuration generation capabilities. The result of the models is the "likeliness" of an input attribute to be the same as an output attribute.

An example is provided below:
Input Structure:
   Company
   - Name
   - VAT
   - Employees []
      - Position / Title
      - Name
      - Addresses[]
         - ZIP
         - City
         - Street
Ouput Structure:
   Customer
   - Company Name
   - Rating
   - Recipient
      - Name
      - Street
      - ZIP

The result of applying the CNN to the attribute:
"Company.Employees[].Person.Addresses[].Address.Street" of the input data model to the output data model would be
Customer
   - Company Name => 0.001
   - Rating => 0.0000001
   - Recipient
      - Name => 0.25
      - Street => 0.9875
      - ZIP => 0.35
where then the value with the highest prediction value may be used as the mapping path. Although the above example may show NLP tokenization for address data by way of example, it can be appreciated that the method may be employed for any input data, such as configuration data for a device, e.g., JOSN configuration for sensors.

The output unit 16 is configured to provide the configuration data for transforming the input data, which is usable to execute the transformation of the input data and likewise data.

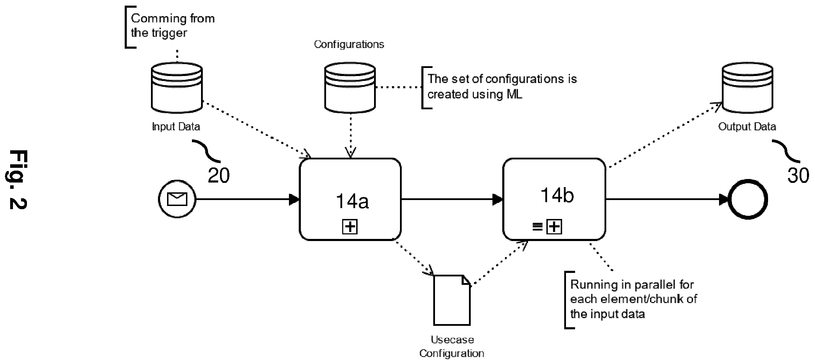

Fig. 2 illustrates stages for transformation of arbitrary input data to unified output data.

The data model transformation process may be triggered by incoming data, i.e., input data 20. The input data 20 may have a first data model, such as structure A shown in Fig. 1. The input data 20 is then processed by a configuration generation module 14a of the processing unit 14.

The configuration generation module 14a derives use case information e.g., from data attributes of the input data 20, and then applies a trained data-driven model to the input data 20 to determine a set of configurations based on the input data 20 and the derived use case information. As an example, the set of configurations may comprise configuration for data cleaning, configuration for data transformation, configuration for data enrichment, or any combination thereof. Then the configuration generation module 14a provides the use case configuration to the data model transformation module 14b for the actual transformation.

An exemplary data model transformation module 14b is shown in Fig. 3. In this example, the data model transformation module 14b comprises three modules including a data cleaning module 14b_1, a data transformation module 14b_2, and a data enrichment module 14b_3.

The data cleaning module 14b_1 is configured to perform data cleaning using the configuration for data cleaning in the set of configurations. The configuration for data cleaning instructs the data cleaning module 14b_1 to fix or remove incorrect, corrupted, incorrectly formatted, duplicate, and/or incomplete data in the input data. The cleaned data is then provided to the data transformation module 14b_2.

The data transformation module 14b_2 is configured to perform mapping between the first data model (i.e., the data model of the input data) and the second data model (i.e., the data model of the output data) using the configuration for data transformation in the set of configurations.

In some examples, the set of transformations can be specified via a fixed set of transformation primitives. The configuration for data transformation may specify data models operations ranging from the simple (e.g., renaming a property/column), to the complex (e.g., changes to an object-oriented hierarchy) through these defined primitives.

In some examples, transformation can be inferred based either on a set changes to the data model of the input data, or a description of the final data model of the output data based on the use case information and an implicit understand of the relationship between the two may be specified in the configuration of data transformation.

In some examples, the configuration for data transformation may comprise a combination of an explicit logical model definition, logical model changes, functional units, an explicit/implicit physical model and physical model changes to define a data model transformation.

The output of the data transformation module 14b_2 is cleaned data that has a uniform structure of information for the particular use case derived from the input data, which is then provided to the data enrichment module 14b_3.

The data enrichment module 14b_3 enhances existing information by supplementing missing or incomplete data, such as relevant context obtained from additional sources, e.g., third-party systems as shown in Fig. 3, and provides output data 30 that is transformed, cleaned, and enriched, which is shown in Fig. 2.

Fig. 4 illustrates a further example of the apparatus 10 for processing input data having multiple different data models. In the example of Fig. 4, two exemplary input data are shown including input data 20A (i.e., input data 1) having a first data model (i.e., structure A shown in Fig. 4) and input data 20B (i.e., input data 2) having a second data model (i.e., structure C shown in Fig. 4). Although Fig. 4 may show a limited number of input data models by way of example, it can be appreciated that a greater or a fewer number of data models may be employed for a given implementation.

The input data 20A and input data 20B are provided to the processing unit 14 via the input unit 12. The processing unit 14 then derives, from the input data 20A, use case information indicating a use case the input data 20A belongs to, and generates, based on the determined use case, usecase configuration 1 according to the method as described herein. The processing unit 14 then transforms the input data 20A into output data 30A having a data model of structure B based on the usecase configuration 1. Similarity, the processing unit 14 also derives, from the input data 20B, use case information indicating a use case the input data 20B belongs to, and generates, based on the determined use case, usecase configuration 2 according to the method as described herein. The processing unit 14 then transforms the input data 20B into output data 30B having a data model of structure D based on the usecase configuration 2. The processing unit 14 may process input data 20A and 20B either sequentially or in parallel.

Fig. 5 shows a high-level block diagram of a computing environment 100, which may be a cloud environment. As shown, the computing environment 100 comprises one or more data sources 110, a data analysis server 120, an electronic communication device 130, and a network 140. In this example, the apparatus 10 is embodied in the data analysis server 120.

The data sources 110 of the illustrate example may include databases, applications, local files, or any combination thereof. The data sources 110 may include data associated with different users, different groups of users, different entities, different workflows, or any combination thereof. For example, the data in the data sources 110 may be associated with different parts of an organization, e.g., different laboratories or different production utilities. In some cases, the data sources 110 may include data from multiple data silos. Each data silo is a collection of information in an organization that is isolated from and not accessible by other parts of the organization. As different users, groups of users, entities, and/or workflows may use different data model according to their own requirements to data consistency and integrity, data in the data sources 110 may be associated with different data models.

The data analysis server 120 of the illustrated example may be a server that provides a web service to facilitate management of data. The data analysis server 120 may comprise a data extraction module (not shown) configured to identify data in the data sources 110 that is to be extracted, retrieve the data from the data sources, and provide the retrieved data to the apparatus 10, which processes the extracted data according to the method as described herein. The processed data is then provided to a data analysis application residing in the electronic communication device 130 so that the data may be displayed and manipulated by a user.

The electronic communication device 130 of the illustrated example may be a desktop, a notebook, a laptop, a mobile phone, a smart phone and/or a PDA. The electronic communication device 130 may comprises a data analysis application, which may be a software application that enables a user to manipulate data extracted from the data sources 110 by the data analysis server 120 and to select and specify actions to be performed on the individual data. For example, the data analysis application may be a desktop application, a mobile application, or a web-based application. The data analysis application may comprise a user interface, such as an interactive interface including, but not limited to, a GUI, a character user interface and a touch screen interface.

The network 140 of the illustrated example communicatively couples the data sources 110, the data analysis server 120, and the electronic communication device 130. In some examples, the network 140 may be the internet. Alternatively, the network 140 may be any other type and number of networks. For example, the network 140 may be implemented by several local area networks connected to a wide area network. For example, the data sources 110 may be associated with a first local area network, the data analysis server 120 may be associated with a second local area network, and the electronic communication device 130 may be associated with a third local area network. The first, second, and third local area networks may be connected to a wide area network. Of course, any other configuration and topology may be utilized to implement the network 140, including any combination of wired network, wireless networks, wide area networks, local area networks, etc.

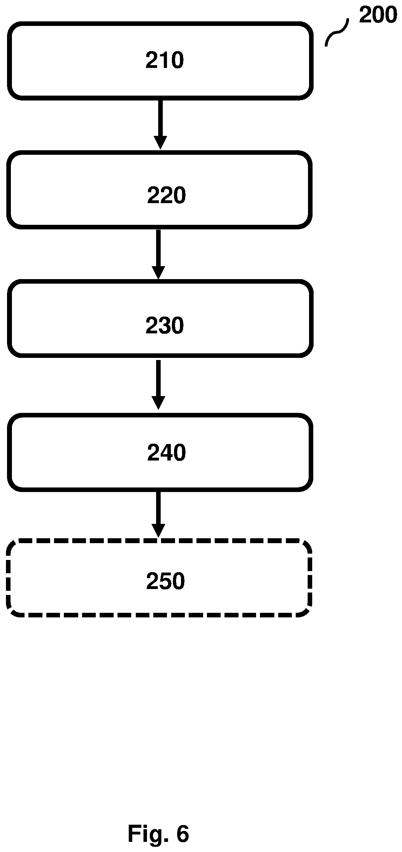

Fig. 6 illustrates a flow chart illustrating a computer-implemented method 200 for data transformation. The method may be understood to underline operation of the above mentioned apparatus 10 for data transformation. However, it will be also understood that the method steps explained in Fig. 6 are not necessarily tied to the architecture of the apparatus 10 as described above in relation to Fig. 1. More particularly, the method described below may be understood as teachings in their own right.

At block 210, input data having a first data model is received e.g., by the exemplary apparatus 10 shown in Fig. 1 or by the exemplary data analysis server 110 shown in Fig. 4. The first data model may be a relational model, an object orientated model, or an XML data model.

In some examples, the input data may be submitted by a user e.g., via an electronic communication device shown in Fig. 5. In some examples, the input data may be extracted from one or more data sources, such as the data sources 110 shown in Fig. 5.

The input data may be in the format for non-cyclical graphs having a tree structure. The received input data may be a coherent format including, but not limited to, a JavaScript Object Notation (JSON) file, a comma-separated values (CSV) file, an extensible markup language (XML) file, and a tabular file. Examples of the tabular file may include, but are not limited to a comma-separated values, CSV, format, and a spreadsheet file format from a Microsoft^{®} Excel^{®} file, an Open Document Format, ODF, a Lotus 1-2-3^{®} worksheet format, a Microsoft^{®} Works spreadsheet format, a VisiCalc^{®} spreadsheet format, an Abykus worksheet format, and an Ability spreadsheet format.

The input data may comprise any type of data including, but not limited to, data obtained from a laboratory environment, and data obtained a production environment. For example, the received input data may include experimental data from one or more labs. For example, in a lab concentrating on the synthesis and measurement of biodegradable polymers, the experimental data may include analytics data, solubility data, mechanical testing data, ecotoxicity tests, and/or analytics data generated from software. Production-related data may relate to the setting where software and other products are actually put into operation for their intended uses by the users.

At block 220, use case information is derived from the input data. The use case information is indicative of a use case belongs to. Thus, the use case information indicates an application in which the input data could be potentially be used, which defines a target data model employed by the application. Various approaches may be used to derive use case information from the schema-level information of the input data.

In some examples, a linguistic matcher may be applied that uses user-defined use case specifications, such as names and text including words or sentences describing one or more user-defined use cases, to find semantically similar schema elements in the input data. Name-based matching may match schema elements with a use case having equal or similar names.

In some examples, a description-based matcher may be applied that determines the similarity between schema elements in the input data and one or more predefined use cases based on comments accompanying the schema elements.

In some examples, the use case information may be derived by parsing the natural language text available relating to use case description in the input data. An example technique to process textual use cases is described in A. Sinha, A. Paradkar, P. Kumanan, and B. Boguraev, "A linguistic analysis engine for natural language use case description and its application to dependability analysis in industrial use cases", In DSN '09, Jun. 29-Jul. 2, 2009, pp 327-336.

In some examples, multiple semantically matched use cases may be found through semantic similarity detector. For each candidate, a degree of similarity by a normalized numeric value in the range of 0 to 1 may be estimated in order to identify the most suitable candidates.

At block 230, based on the determined use case, configuration data is generated for transforming the input data into output data having a second data model, i.e., the target data model that meets the requirements of the application in which the data will be potentially used. A uniform data model is required per use case and the second data model is the uniform data model required by the determined use case.

The configuration data may be generated using a trained data-driven model. The data-driven model has been trained based on a plurality of training examples, each training example comprising input data having a use case and output data associated with a particular set of configurations, such as configuration for data cleaning, configuration for data transformation, configuration for data enrichment, or any combination thereof.

The configuration data may comprise a set of configurations, such as configuration for data cleaning, configuration for data transformation, configuration for data enrichment, or any combination thereof.

At block 240, the configuration data for transforming the input data is provided e.g., to a storage device, which is usable to execute the transformation of the input data and likewise data. For example, the configuration data is provided as a reusable procedure template for performing the transformation of data having the first data model.

Optionally, at block 250, the input data is transformed to the output data according to the generated configuration data. Exemplary stages for transformation from a first model to a second model are shown in Fig. 2.

Fig. 7 illustrates a flow chart illustrating a computer-implemented method 300 for controlling an operation of a device, e.g., a sensor, a device for analyzing spectra of automotive coating layers, a steam cracker for chemical production.

At block 310, input data usable for controlling the operation of the device is received.

At block 320, the received input data to the output data according to configuration data generated according to the method shown in Fig. 6, such that the output data has a uniform data model required for controlling the operation of the device.

For example, the received input data may be analyzed to determine that the use case is to configure a device for analyzing the spectra of automotive coating layers, and a set of configurations is determined for transforming the input data to target output data, i.e., configuration data having an appropriate format for configuring the device for analyzing the spectra of automotive coating layers.

On the other hand, if it is determined that the use case is to configure a stream cracker, a set of configurations is determined for transforming the input data to configuration data having an appropriate format for configuring the stream cracker.

At block 330, the output data is provided for controlling the operation of the device.

It will be appreciated that the above operation may be performed in any suitable order, e.g., consecutively, simultaneously, or a combination thereof, subject to, where applicable, a particular order being necessitated, e.g., by input/output relations.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one." In other words, the indefinite article "a" or "an" does not exclude a plurality.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A computer-implemented method (200) for performing data model transformation, comprising:
- receiving (210) input data having a first data model;
- deriving (220), from the received input data, use case information indicating a use case the input data belongs to;
- generating (230), based on the determined use case, configuration data for transforming the input data into output data having a second data model, wherein a uniform data model is required per use case and the second data model is the uniform data model required by the determined use case; and
- providing (240) the configuration data, which is usable for transforming the input data.

2. Computer-implemented data processing method according to claim 1,
wherein the configuration data is generated using a data-driven model, wherein the data-driven model has been trained based on a plurality of training examples, each training example comprising input data having a use case and output data associated with a particular configuration.

3. Computer-implemented data processing method according to claim 1 or 2,
wherein the configuration data comprises one or more of the following configurations:
- configuration for data cleaning;
- configuration for data transformation; and
- configuration for data enrichment.

4. Computer-implemented data processing method according to any one of the preceding claims, further comprising:
- transforming the input data to the output data according to the generated configuration data.

5. Computer-implemented data processing method according to any one of the preceding claims,
wherein the configuration data is provided as a reusable procedure template for performing the transformation of data having the first data model.

6. Computer-implemented method according to any one of the preceding claims,
wherein the data-driven model is in a cloud environment.

7. Computer-implemented method according to any one of the preceding claims,
wherein input data comprises a device configuration file usable for controlling the operation of a device.

8. A computer-implemented method (300) for controlling an operation of a device, comprising:
- receiving (310) input data usable for controlling the operation of the device;
- transforming (320) the received input data to the output data according to configuration data generated according to any one of the preceding claims, such that the output data has a uniform data model required for controlling the operation of the device; and
- providing (330) the output data, which is usable for controlling the operation of the device.

9. An apparatus (10), the apparatus comprising one or more processing unit(s) to provide configuration data for transforming an input data into needed output data, wherein the processing unit(s) include instructions, which when executed on the one or more processing unit(s) perform the method steps of any one of claims 1 to 7.

10. An apparatus for controlling an operation of a device, the apparatus comprising one or more processing unit(s) configured to control the operation of the device, wherein the processing unit(s) include instructions, which when executed on the one or more processing unit(s) perform the method steps of claim 8.

11. A computer program element comprising instructions, which when executed by a processing unit, cause the processing unit to carry out the steps of the method of any one of claims 1 to 7 or to carry out the steps of the method of claim 8.

12. A computer-readable data carrier having stored thereon the computer program element of claim 11.
